# EUROPÄISCHE PATENTSCHRIFT

(11) **EP 0 622 553 B1**
(45) Veröffentlichungstag und Bekanntmachung des Hinweises auf die Patenterteilung: **08.01.1997**
(21) Anmeldenummer: 94104757.3
(22) Anmeldetag: 25.03.1994
(51) Int. Cl.: F16B 15/04

(54) **Nagel mit einem Spreizbereich**
Nail with zone for spreading
Clou avec zone d'expansion

(30) Priorität: 17.04.1993 DE 4312234; 26.04.1993 DE 4313643; 17.07.1993 DE 4324069; 17.09.1993 DE 4331583
(43) Veröffentlichungstag der Anmeldung: 02.11.1994
(73) Patentinhaber: fischerwerke Artur Fischer GmbH & Co. KG, D-72178 Waldachtal (DE)
(72) Erfinder: Fischer, Artur, Prof. Dr. h. c., D-72178 Waldachtal (DE)

(56) Entgegenhaltungen:
- DE-A- 3 345 331
- DE-C- 948 459

## Beschreibung

Die Erfindung betrifft einen Nagel mit einem Spreizbereich gemäß Oberbegriff des Anspruches 1.

Aus der DE-A-33 45 331 ist ein als Nagel ausgebildetes Befestigungselement bekannt, das im Bereich seiner vorderen Nagelstirnseite einen Spreizbereich hat, der von zwei im Abstand verlaufenden, nach außen gewölbten Schenkeln gebildet wird. Die Verankerung eines solchen Befestigungselements erfolgt in der Weise, daß dessen Schaft in ein vorgebohrtes Bohrloch eines Mauerwerks oder dgl. eingeschlagen wird. Beim Eintreiben des Schafts in das Bohrloch werden die Spreizschenkel von der Bohrlochwandung nach innen zusammengepreßt, wobei durch eine zwischen den Spreizschenkeln befindliche Einlage ein erhöhter Druck von den Spreizschenkeln gegen die Bohrlochwandung erzeugt werden kann. Nach dem Eintreiben werden die Spreizschenkel des Befestigungselements durch die plastische und/oder elastische Rückstellkraft der Einlage gegen die Bohrlochwandung gepreßt, wodurch eine entsprechend hohe Haltekraft erreicht wird. Allerdings ist aufgrund der Einlage der Eintreibwiderstand des bekannten Nagels sehr hoch.

Der Erfindung liegt die Aufgabe zugrunde, einen Nagel mit einem Spreizbereich zu schaffen, der einerseits problemlos in ein Bohrloch eines Mauerwerks einsetzbar ist und hohe Haltewerte aufweist.

Die Lösung dieser Aufgabe erhält man durch die im Anspruch 1 angegebenen Merkmale. Die durch die Längskerbe gebildeten und seitlich abstehenden Spreizschenkel werden beim Einschlagen des Nagels in ein Bohrloch durch plastische und elastische Verformung nach innen gedrückt und bilden damit einen Reibschluß mit der Bohrlochwandung. Aufgrund des elastischen und plastischen Verformungsanteils des Spreizbereiches ergeben sich hohe Haltewerte. Durch den elastischen Verformungsanteil ist der Nagel auch in der Lage, eine Bohrlocherweiterung, beispielsweise durch Rißbildung, ohne größeren Haltewertverlust auszugleichen. Die bereits in dem vor dem Spreizbereich liegenden geraden Schaftabschnitt beginnende und sich bis zur vorderen Nagelstirnseite erstreckende Längskerbe bewirkt an den Übergangszonen zum Spreizbereich eine hohe Flexibilität, die den Eintreibwiderstand des Nagels, insbesondere in engen Bohrlöchern, erheblich reduziert. Ferner wird durch die an der vorderen Nagelstirnseite offene Längskerbe eine Möglichkeit geschaffen, das im Bohrloch befindliche Bohrmehl beim Einschlagen des Nagels aufzunehmen. Durch die bis zur Stirnseite verlaufende Längskerbe wird somit vermieden, daß sich das Bohrmehl an der Stirnseite des Nagels staut und das Einschlagen des Nagels behindert oder sogar unmöglich macht. Das die Längskerbe füllende Bohrmehl führt ferner zu einer Erhöhung der Haltewerte, da das Bohrmehl zusätzlich als Reibmittel wirkt.

Der Spreizbereich wird vorzugsweise so hergestellt, daß durch einen Kerbvorgang mit einem Keil der Schaft symmetrisch aufgeweitet wird und gleichzeitig die fließenden Übergänge angeprägt werden.

Besonders vorteilhaft ist es, daß die Mantelfläche der Spreizschenkel im Querschnitt annähernd kreisrund geformt ist, und zwar mit geringfügig größerem Durchmesser als der Schaftdurchmesser. Die Rundung im Spreizbereich entspricht somit annähernd der Rundung des Schaftes und der Bohrlochwandung, wodurch auch im Spreizbereich eine gleichmäßige, flächige Anlage an der Bohrlochwandung erreicht wird. Der Nagel verspannt sich somit im Spreizbereich am Bohrloch nicht nur punktuell, sondern flächig, was deutlich bessere Haltewerte bringt. Durch die Abflachungen der Längskanten der Spreizschenkel wird das Einbiegen der Spreizschenkel beim Einschlagen des Nagels in das Bohrloch erleichtert.

Die Längskerbe kann einen U-förmigen Querschnitt haben, was durch Verwendung eines entsprechenden Keils zum Aufkerben erreicht wird. Dadurch entsteht im Bereich des Kerbgrundes ein weitgehendst gleichmäßiger Querschnitt des Spreizbereichs, der eine hohe Elastizität für die gewölbten Spreizschenkel bewirkt.

Eine vom Nagelkopf ausgehende Kunststoffummantelung, die vor dem Spreizbereich endet, bietet einen zusätzlichen Korrosionsschutz durch Abdichtung des Bohrlochs im Bereich der Bohrlochöffnung.

Da der erfindungsgemäße Nagel nach der Verankerung in einem Bohrloch nur noch äußerst schwer wieder aus diesem entfernt werden kann, sieht eine Weiterbildung der Erfindung vor, daß der Nagel einen Nagelkopf mit einem an seiner Oberseite vorgesehenen Zentrierkerbe besitzt, die zentrisch zur Mittelachse des Schaftes ausgerichtet ist. Die Zentrierkerbe ermöglicht ein exaktes Abbohren des Nagelkopfes, und zwar mit einem Bohrer, dessen Durchmesser dem Schaftdurchmesser entspricht. Dadurch läßt sich dann beispielsweise ein an einer Wand befestigtes Brett vom kopflosen Nagel problemlos abziehen, sofern eine solche Demontage erforderlich ist.

Um den Zufluß des Bohrmehls in die Längskerbe beim Einschlagen des Nagels zu verbessern, ist es zweckmäßig die vordere Nagelstirnseite mit einer Schräge zur Bildung einer Nagelspitze zu versehen.

In einer weiteren Ausgestaltung der Erfindung kann der Spreizbereich des Nagels mit einer im Profil dreiecksförmigen Längsrippe versehen sein, die gegenüber der Längskerbe angeordnet ist. Mit dieser über den Außenumfang des Spreizbereichs überstehenden Längsrippe wird zusätzlich zu den beiden Spreizschenkeln eine weitere Anlage im Bohrloch erreicht, so daß einerseits aufgrund der Dreipunktabstützung ein Zentriereffekt entsteht und andererseits eine höhere Verpressung der Spreizschenkel erreicht wird. Durch die Dreiecksform des Profils der Längsrippe schafft diese auch einen Ausgleich der Bohrlochtoleranzen. Bei engeren Bohrlöchern gräbt sich die Längsrippe mehr und bei weiteren Bohrlöchern weniger in die Wandung des Bohrloches ein, so daß weitgehenst unabhängig vom Bohrlochdurchmesser eine gleichbleibende Reibung des Spreizbereiches erzeugt wird.

Um das Einführen und Einschlagen des Nagels mit Längsrippe in das Bohrloch zu erleichtern, ist es zweckmäßig, daß die Längsrippe in einem Abstand zur vorderen Nagelstirnseite in einer Zuspitzung ausläuft.

Die Erfindung wird nachfolgend anhand eines in der Zeichnung dargestellten Ausführungsbeispiels näher erläutert.

Es zeigen:
- Figur 1: einen Nagel mit Spreizbereich,
- Figur 2: eine Draufsicht auf die vordere Nagelstirnseite,
- Figur 3: einen Längsschnitt des Nagels und
- Figur 3a: die Rückseite des vorderen Teils des Nagels nach Figur 1,
- Figur 4: die Kunststoffummantelung des Nagels nach Figur 1.

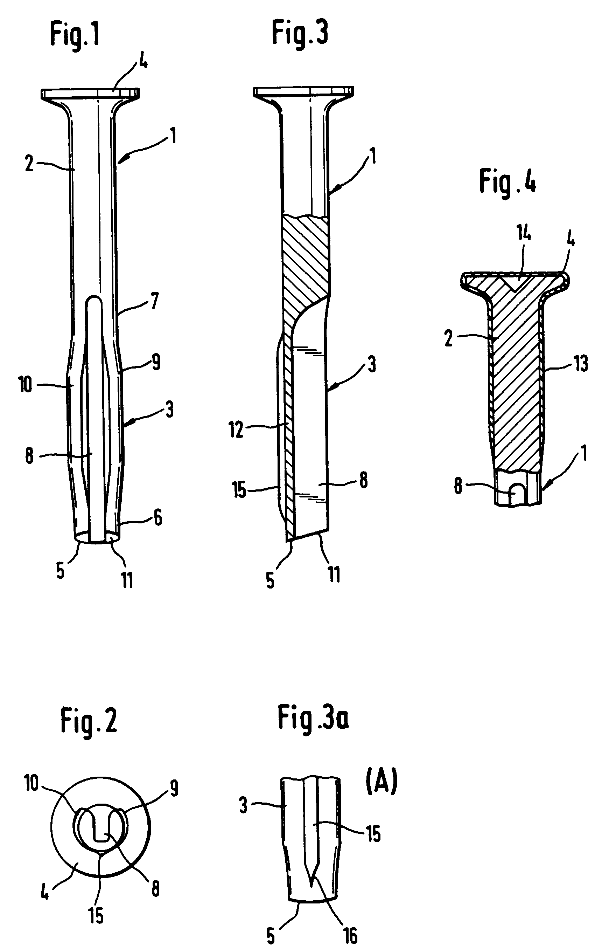

Der in Figur 1 dargestellte Nagel 1 hat einen Schaft 2 mit einem Spreizbereich 3 und einen Nagelkopf 4. Der Spreizbereich 3 ist geringfügig von der vorderen Nagelstirnseite 5 abgesetzt, so daß zwischen dieser Stirnseite 5 und dem Spreizbereich 3 ein gerader Schaftabschnitt 6 verbleibt. Ein längerer gerader Schaftabschnitt 7 erstreckt sich zwischen Spreizbereich 3 und Nagelkopf 4.

Der aus Metall hergestellte Nagel 1 ist durch einen Kerbvorgang mittels eines Keils im Spreizbereich 3 aufgekerbt, so daß eine Längskerbe 8 mit U-förmigem Querschnitt entsteht. Die Längskerbe 8 wird von seitlichen Spreizschenkeln 9, 10 begrenzt, die nach außen gewölbt am Schaft 2 überstehen. Zur besseren Zuführung des Bohrmehls in die an der vorderen Stirnseite 5 offenen Längskerbe 8 beim Einschlagen des Nagels ist die Stirnseite 5 mit einer Schräge 11 versehen.

In der Darstellung gemäß Figur 2 ist die U-förmige Aufkerbung der Längskerbe 8 erkennbar. Dadurch entsteht im Bereich des Kerbgrundes eine gleichmäßige Wandungs stärke für den Spreizbereich 3, der zu einer hohen Elastizität der nach außen gewölbten Spreizschenkel 9, 10 führt. Durch die Abflachung der Längskanten der Spreizschenkel 9, 10 wird das Einbiegen und die Anlage an der Bohrlochwandung begünstigt.

Der in Figur 3 dargestellte Längsschnitt zeigt den Nagel von Figur 1, jedoch um 90° gedreht. Die Schräge 11 an der vorderen Nagelstirnseite 5 verläuft von der offenen Seite der Längskerbe 8 in einem spitzen Winkel zum Grund 12 der Längskerbe.

Figur 4 zeigt den Nagel 1 mit einer Kunststoffummantelung 13 im Bereich des Nagelkopfes 4 und des Schaftes 2. Vor Erreichen des Spreizbereichs 3 läuft die Kunststoffummantelung 13 flach zum Schaft 2 aus.

An der Oberseite des Nagelkopfs 4 ist eine Zentrierkerbe 14 eingeprägt, die zentrisch zur Längsachse des Schafts 2 ausgerichtet ist.

In den Figuren 2, 3 und 3a ist die Anordnung einer Längsrippe 15 am Spreizbereich 3 des Nagels 1 erkennbar, Die Längsrippe 15 weist ein dreieckförmiges Profil auf und befindet sich gegenüber der Längskerbe 8. Zum leichteren Einführen und Einschlagen des Nagels 1 in ein Bohrloch endet die Längsrippe 15 in einem Abstand zur vorderen Nagelstirnseite 5 und ist mit einer Zuspitzung 16 versehen.

## Patentansprüche

1. Nagel mit einem im Abstand von der vorderen Nagelstirnseite ausgebildeten Spreizbereich, an dessen Schaft im Spreizbereich zwei gewölbte Spreizschenkel seitlich überstehen, zwischen denen im Schaft ein Freiraum verläuft und die an beiden Enden des Spreizbereichs in gerade Schaftabschnitte übergehen, **dadurch gekennzeichnet**, daß der Freiraum als Längskerbe (8) ausgebildet ist, die von dem nagelkopfseitig vor dem Spreizbereich liegenden geraden Schaftabschnitt (7) ausgeht und bis zur vorderen Nagelstirnseite (5) verläuft.

2. Nagel nach Anspruch 1, **dadurch gekennzeichnet**, daß die Spreizschenkel (9, 10) durch Aufkerbung des geraden Schaftes (2) symmetrisch zur Längsachse des Schaftes nach außen gewölbt sind und ein fließender Übergang an beiden Enden des Spreizbereichs (3) zu den geraden Schaftabschnitten (6, 7) vorhanden ist.

3. Nagel nach Anspruch 2, **dadurch gekennzeichnet**, daß der Spreizbereich (3) im Querschnitt annähernd kreisförmig gerundet ist, und daß die Spreizschenkel (9, 10) an ihren Längskanten abgeflacht sind.

4. Nagel nach Anspruch 1, **dadurch gekennzeichnet**, daß die Längskerbe (8) einen U-förmigen Querschnitt hat.

5. Nagel nach Anspruch 1, **dadurch gekennzeichnet**, daß der Nagelkopf (4) und der sich daran anschließende Schaftabschnitt (7) eine Kunststoffummantelung (13) hat, deren Wandung vor Erreichen des Spreizbereichs (3) flach auf den Schaft (2) ausläuft.

6. Nagel nach Anspruch 1, **dadurch gekennzeichnet**, daß der Nagel (1) einen Nagelkopf (4) mit einer an seiner Oberseite vorgesehenen Zentrierkerbe (14) besitzt, die zentrisch zur Längsachse des Schaftes (2) ausgerichtet ist.

7. Nagel nach Anspruch 1, **dadurch gekennzeichnet**, daß die vordere Nagelstirnseite (5) eine durch eine Schräge (11) gebildete Nagelspitze aufweist.

8. Nagel nach Anspruch 1, **dadurch gekennzeichnet**, daß der Spreizbereich (3) des Nagels (1) gegenüber der Längskerbe (8) mit einer im Profil dreiecksförmigen Längsrippe (15) versehen ist.

9. Nagel nach Anspruch 8, **dadurch gekennzeichnet**, daß die Längsrippe (15) in einem Abstand zur vorderen Nagelstirnseite (5) in einer Zuspitzung (16) ausläuft.

## Claims

1. A nail having an expansion region formed at a distance from the front end face of the nail, from the shank of which nail in the expansion region there project laterally two bowed expansible arms, between which there runs in the shank a free space, and which continue at both ends of the expansion region as straight shank portions, characterized in that the free space is in the form of a longitudinal channel (8) which starts from the straight shank portion (7) lying at the nail head end before the expansion region and extends as far as the front end face (5) of the nail.

2. A nail according to claim 1, characterized in that the expansible arms (9, 10) are bowed outwardly by indenting the straight shank (2) symmetrically with respect to the longitudinal axis of the shank, and there is a smooth transition at both ends of the expansion region (3) to the straight shank portions (6, 7).

3. A nail according to claim 2, characterized in that the expansion region (3) is approximately circularly rounded in cross-section, and the expansible arms (9, 10) are bevelled at their longitudinal edges.

4. A nail according to claim 1, characterized in that the longitudinal channel (8) has a U-shaped cross-section.

5. A nail according to claim 1, characterized in that the nail head (4) and the adjoining shank portion (7) has a plastics material covering (13), the wall of which terminates flush on the shank (2) before reaching the expansion region (3).

6. A nail according to claim 1, characterized in that the nail (1) has a nail head (4) having on its top face a centering indentation (14) that is aligned centrally with respect to the longitudinal axis of the shank (2).

7. A nail according to claim 1, characterized in that the front end face (5) of the nail has a nail tip formed by a slope (11).

8. A nail according to claim 1, characterized in that the expansion region (3) of the nail (1) is provided with a longitudinal rib (15) of triangular profile opposite the longitudinal channel (8).

9. A nail according to claim 8, characterized in that the longitudinal rib (15) terminates at a distance from the front end face (5) of the nail in a tapering point (16).

## Revendications

1. Clou comportant une zone d'expansion ménagée à distance de la face extrême antérieure dudit clou au-delà de la tige duquel font saillie latéralement, dans la zone d'expansion, deux branches déployables bombées entre lesquelles une dépouille est pratiquée dans la tige, et qui fusionnent dans des segments de tige rectilignes aux deux extrémités de la zone d'expansion, caractérisé par le fait que la dépouille est réalisée sous la forme d'une entaille longitudinale (8) qui part du segment de tige rectiligne (7) situé avant la zone d'expansion du côté de la tête du clou, et qui s'étend jusqu'à la face extrême antérieure (5) dudit clou.

2. Clou selon la revendication 1, caractérisé par le fait que les branches déployables (9, 10) sont bombées vers l'extérieur symétriquement par rapport à l'axe longitudinal de la tige, suite à l'entaillage de cette tige rectiligne (2), une transition continue, vers les segments de tige rectilignes (6, 7), étant prévue aux deux extrémités de la zone d'expansion (3).

3. Clou selon la revendication 2, caractérisé par le fait que la zone d'expansion (3) est arrondie en une section transversale approximativement circulaire ; et par le fait que les branches déployables (9, 10) sont aplaties sur leurs bords longitudinaux.

4. Clou selon la revendication 1, caractérisé par le fait que l'entaille longitudinale (8) est de section transversale en U.

5. Clou selon la revendication 1, caractérisé par le fait que la tête (4) dudit clou, et le segment de tige (7) attenant, comportent une enveloppe (13) en matière plastique dont la paroi s'achève à plat vers la tige (2) avant d'atteindre la zone d'expansion (3).

6. Clou selon la revendication 1, caractérisé par le fait que ledit clou (1) possède une tête (4) munie d'une encoche de centrage (14) qui est prévue à sa face supérieure, et occupe une position centrée par rapport à l'axe longitudinal de la tige (2).

7. Clou selon la revendication 1, caractérisé par le fait que la face extrême antérieure (5) dudit clou présente une pointe de clou formée par un biseau (11).

8. Clou selon la revendication 1, caractérisé par le fait que la zone d'expansion (3) dudit clou (1) est munie, en vis-à-vis de l'entaille longitudinale (8), d'une nervure longitudinale (15) de profil triangulaire.

9. Clou selon la revendication 8, caractérisé par le fait que la nervure longitudinale (15) s'achève par une pointe (16) à distance de la face extrême antérieure (5) dudit clou.
